# EUROPEAN PATENT APPLICATION

(11) **EP 1 655 276 A1**
(43) Date of publication of application: **10.05.2006**
(21) Application number: 05101738.2
(22) Date of filing: 07.03.2005
(51) Int. Cl.: C05G 3/00, C05G 5/00, C05D 7/00

(54) **Effervescent tablet comprising a colorant**

(30) Priority: 04.11.2004 EP 04105531
(71) Applicant: Overwater, Jan, 1424 RP De Kwakel (NL)
(72) Inventor: Overwater, Jan, 1424 RP De Kwakel (NL)
(74) Representative: Beetz, Tom

(57) **Abstract**

The invention pertains to an effervescent tablet comprising an organic acid, an alkali metal or earth alkali metal hydrogen carbonate, and a colorant for decorative use, more particularly such tablet further comprising at least one of an aromatic substance and nutrient for plants or flowers. the invention further relates to a method for giving color to water for cut flowers by adding the tablet to the water, and to a combination of cut flowers and said tablet.

## Description

The invention relates to an effervescent tablet comprising a colorant. More particularly, the invention relates to a method for giving color to water which is used for cut flowers. The invention also pertains to a combination of cut flowers and said tablet.

Effervescent tablets as such are known. For instance in British patent application GB 1075470 effervescent tablets which contain at least one test reagent or diagnostic agent to be dispersed in an aqueous liquid comprise a core and at least one covering layer, each containing a water-soluble dye is described. This relates to test reagent or diagnostic agent is therefore related to a completely different field and use.

In FR 2628734 soluble fertilizers in tablet for are disclosed, containing nutrient materials and an effervescence agent, so that the tablet bubbles and dissolves in water. The tablets may also contain a dye, to give an instant indication that the fertilizer has been added to the water. These tablets thus service another purpose, i.e. not a decorative but are used as an indicator for giving a measured amount of fertilizing material to a garden.

In CA 2122873 an effervescent tablet is formed which contains a carbonate, an organic acid, at least one dye, a solubilizing agent, and a binder. The tablet, which is non-toxic, can be dissolved in water, so that a dye is released which can be used to dye Easter eggs. Also this tablet served a different purpose and is used in a different field.

The closest prior art is British patent application GB 1442979 disclosing a composition for keeping flowers fresh, which composition is in the form of an effervescent tablet which comprises nutrient for keeping flowers fresh. These tables do not contain colorants or dyes.

It is an object of the invention to provide a method for giving a color to water for decorative purposes, and more particularly for giving a color to water for cut flowers. In another object it is the purpose of the present invention to give a color to the water for flowers and also to give nutrient to the flower and/or to give an odor to the environment.

In its broadest concept the invention relates to an effervescent tablet comprising an organic acid, an alkali metal or earth alkali metal hydrogen carbonate, and a colorant for decorative use. More particularly, the invention relates to such tablets further comprising at least one of an aromatic substance and nutrient for plants or flowers.

The invention further provides in a method of giving a color to water, for instance water in a bowl or the like. More particularly, the water is water for flowers, such as water in a vase. It is further commercially attractive to provide a combination of cut flowers and a tablet of the invention which can be used as such by the consumer. The tablet may for that purpose the attached to a label that can be provided together with the flowers or plant.

The effervescent tablet may be any effervescent tablet that is known in the art and that sufficiently fast. The production of effervescent tablets from, for instance, bicarbonates and solid organic carboxylic acids is known but not in combination with the other components mentioned above with the purpose of providing a composition for giving water for flowers a color. Further advantages are the easy handling and, as a result of the effervescent effect, the ability to dissolve rapidly, as well as a good mixing and thus a rapid effectiveness of the active components of the effervescent tablet composition according to the present invention. In a preferred embodiment the tablet is coated, for instance with a cellulose derivative such as hydroxypropyl methylcellulose. Coated tablets have the advantage that they prevent preliminary release of the colorant and further improve the resistance against humidity.

The following ingredients are mentioned as example only and should not be interpreted restrictively.

A suitable composition for the tablet of the invention may comprise one or more of the following components (expressed in wt.% based on the total weight of the mixture):
Optionally, a plant nutrient, for instance a sugar such as glucose and/or dextrose, in an amount of 0 to 96 wt.%, preferably 35 to 75 wt.%
Optionally, a surfactant, preferably in an amount of 1 to 4 wt.%.
Optionally, a bactericide for inhibiting or killing bacteria in the water for the flowers, preferably in an amount of 1 to 5 wt.%.

An organic carboxylic acid, preferably an organic dicarboxylic acid such as for instance succinic acid or tartaric acid, preferably in an amount of 5 to 40 wt.%, more preferably 10 to 26 wt.%.

An alkali metal or earth alkali metal hydrogen carbonate, preferably 6 to 40 wt.%, more preferably 15 to 30 wt.%. The alkali metal, particularly sodium or potassium, hydrogen carbonates are preferred.

The above mixture can be varied but at least contains the organic carboxylic acid, the hydrogen carbonate and the colorant. This mixture forms the basis for making an effervescent tablet that is suitable for giving a color to water.

The organic carboxylic acid is preferably in its anhydrous form. It was found that the use of anhydrous organic carboxylic acids substantially increase the stability of the effervescent tablet. Such tablets are not hygroscopic and can be stored and sold without the need for special water-impermeable packaging. Suitable anhydrous organic carboxylic acids include, but not restricted to, citric acid, oxalic acid, pyruvic acid, malic acid, malonic acid, succinic acid, glutaric acid, adipic acid, gluconic acid, lactic acid, tartaric acid, and mixtures thereof. Organic dicarboxylic acids are more preferred, and most preferred are anhydrous hydroxy dicarboxylic acids such as anhydrous tartaric acid

The mixture further may comprise a thickening agent such as polyethylene glycol (for instance PEG 6000, Na stearyl fumarate, and the like) for preventing sticking.

The nutrient may be any common nutrient for use in flowers and plants, and usually contain a sugar or a mixture of sugars, such as glucose, dextrose, and the like.

The mixture may contain common bactericides and fungicides such as quaternary ammonium compound, containing an alkyl radical, for example, one of the following Barquat® MS-100 (myristyl dimethyl benzyl ammonium chloride dihydrate), Bardac® 22 (didecyl dimethyl ammonium chloride), Bardac® 20 (a mixture of 50 % by weight octyl decyl dimethyl ammonium chloride; 25% by weight dioctyl dimethyl ammonium chloride and 25% by weight didecyl dimethyl ammonium chloride).

The tablet further must contain a colorant. The colorant may be any colorant that does not harm the flowers. In principle almost any colorant can be used in quantities sufficient to give the desired color intensity. Suitable amounts are 0.1 to 10 wt.%, more preferably 0.5 to 5 wt.%. Suitable colorants include, but are not limited to ecoline pigments, food pigments (E dyes), acid pigments, metal complex acid dyes, basic dyes, chrome dyes, disperse dyes, solvent dyes, direct dyes, phthalates fast dyes, naphthol dyes, reactive dyes, such as pigment emulsion dyes, fast color salts dyes, rapid fast dyes, aluminum lake color (pigments) wet dyes, natural dyes, and the like.

The tablet may contain other components such as potassium chloride (1 to 5 wt.%), aluminum sulfate (1 to 5 wt.%), and the like.

The tablet may contain aromatic compounds such as ethereal oils, hesperides, air fresher, and the like, such as for instance the oils rose Sonia, rose Tros, freesia, carnation, lily-of-the-valley, lilac, floral bouquet, sweet freesia, rose fruity, banana sweet, and cinnamon.

In a specific example according to the invention the following mixture for an effervescent tablet was made:

| | | |
|---|---|---|
| Flower Food Clear® (Plant nutrient mix) | 56 | wt.% |
| tartaric acid | 14.8 | wt.% |
| NaHCO₃ | 26.3 | wt.% |
| PEG 6000 | 2.9 | wt.% |

To this mixture 1 wt.% of Tartrazine E-120 (a colorant) based on the weight of the mixture was added, i.e. to 495 grams of above mixture 5 grams of colorant were added.

## Claims

1. An effervescent tablet comprising an organic acid, an alkali metal or earth alkali metal hydrogen carbonate, and a colorant for decorative use.

2. The tablet of claim 1 wherein the organic acid is anhydrous.

3. The tablet of claim 1 or 2 further comprising at least one of an aromatic substance and nutrient for plants or flowers.

4. A method for giving color to water for use with cut flowers by adding the tablet of any one of claims 1 to 3 to the water.

5. A combination of cut flowers and the tablet of any one of claims 1 to 3.
